# EUROPEAN PATENT APPLICATION

(11) **EP 1 396 976 A2**
(43) Date of publication of application: **10.03.2004**
(21) Application number: 03019465.8
(22) Date of filing: 28.08.2003
(51) Int. Cl.: H04L 29/06

(54) **Electronic device, communication environment setting method, and program**

(30) Priority: 02.09.2002 JP 2002256915
(71) Applicant: Kabushiki Kaisha Toshiba, Tokyo (JP)
(72) Inventor: Watanabe, Hiroyuki, Minato-ku, Tokyo 105-8001 (JP); Hatano, Ryo, Minato-ku, Tokyo 105-8001 (JP); Takahashi, Kei, Minato-ku, Tokyo 105-8001 (JP)
(74) Representative: Henkel, Feiler, Hänzel

(57) **Abstract**

An electronic device having a communication function comprises a section (210) for setting predetermined information using a predetermined communication profile from a plurality of communication profiles created based on setting information required for a communication used in a network, and performing communication connection according to the network setting, and a section (203, 204) for determining whether or not communication connection by the means for performing communication connection has been successfully established, and selecting a communication profile optimal for a current network environment from the plurality of communication profiles when the connection has not been successfully established, wherein the means for performing communication connection establishes communication connection using the selected communication profile.

## Description

The present invention relates to an electronic device having a communication function.

The present invention further relates to a communication environment setting method and a program preferable to be used in a portable computer, especially in a mobile terminal device.

In recent years, various communication functions through a wireless or wired network connection are mounted on a portable computer, especially on an electronic device such as a mobile terminal. These various communication functions are incorporated in an electronic device or provided as external devices to be statically or dynamically managed by a control function such as an OS (operating system) operating on the electronic device. As a device technique adaptable to a plurality of communication functions, conventionally there is present a technique for adapting the communication functions to various network environments by selectively using plural types of communication devices by, for example, a plug-and-play function (refer to Jpn. Pat. Appln. KOKAI Publication No. 2002-158732).

It is possible to realize a system configuration adaptable to various communication functions by applying this technique. However, the above prior art only changes the communication device depending on a status where the communication device is used, and does not provide a function for changing various settings on a communication such as a device relating to the communication, an application, and the like. Particularly, functions and configuration of an electronic device having communication functions are remarkably complicated in recent years. Therefore, changeover of various settings required for the communication along with a change in a network environment forces a user complicated operations so that a large amount of time and labor have been required for the setting task.

As described above, conventionally, a large amount of time and labor have been required for changeover of various settings required for a communication along with a change in a network environment.

An object of the present invention is to provide an electronic device, a communication environment setting method, and a program which can remarkably reduce operations and working load of user on various settings required for a communication along with a change in a network environment and which can realize a communication environment setting changeover function adaptable to various network environments with easy and simple operation.

The aspect of the present invention is characterized in that, when a computer device adaptable to various communication functions is realized, various setting information required for a communication along with a change in a network environment such as status and setting of a communication device, partial setting of a communication function provided on the communication device, setting accompanying a device having a wireless communication function, and setting of a software relating to the communication are stored and managed as communication profiles, respectively, and a communication profile diagnosis and automatic changeover functions are provided so that automatic changeover of an environment setting along with a change in a network environment, automatic changeover using communication means, activation control of a communication software, and the like are realized.

An electronic device having a communication function according to a first aspect of the present invention is characterized by comprising: means for setting predetermined information using a predetermined communication profile from a plurality of communication profiles created based on setting information required for a communication used in a network, and performing communication connection according to the network setting; and means for determining whether or not communication connection by the means for performing communication connection has been successfully established, and selecting a communication profile optimal for a current network environment from the plurality of communication profiles when the connection has not been successfully established, wherein the means for performing communication connection establishes communication connection using the selected communication profile.

In the first aspect, there is characterized by further comprising: means for detecting a change in a network environment; means for, when the means for detecting the change in the network environment detects a change in a network environment, acquiring setting information required for a communication used in the detected network environment and creating a communication profile based on the information; and means for managing communication profiles created by the means for creating the communication profile, wherein the means for performing communication connection performs network setting using a communication profile managed by the means for managing communication profiles and establishes communication connection according to the setting, and means for diagnosing a communication profile determines whether or not communication connection by the means for performing communication connection has been successfully established, and selects a communication profile optimal for a current network environment detected by the means for detecting the change in the network environment from the communication profiles managed by the means for managing communication profiles when the connection has not been successfully established.

A communication environment setting method for an electronic device according to a second aspect of the present invention is characterized by comprising: setting predetermined information using a predetermined communication profile from a plurality of communication profiles created based on setting information required for a communication used in a network, and performing communication connection according to the network setting; and determining whether or not communication connection by the performing communication connection has been successfully established, selecting a communication profile optimal for a current network environment from the plurality of communication profiles when the connection has not been successfully established, and changing over a communication profile used in the communication connection to the selected communication profile.

A communication environment setting method according to a third aspect of the present invention is characterized by comprising: detecting a change in a network environment to be used; acquiring setting information required for a communication used in the detected network environment and creating a communication profile based on the information, when a change in a network environment is detected; and managing the communication profile, wherein the detecting the change in the network environment performs network setting using the communication profile and establishes communication connection according to the setting, and the acquiring setting information determines whether or not communication connection has been successfully established, and selects a communication profile optimal for a detected current network environment from the communication profile when the connection has not been successfully established.

A computer-readable program causing a computer to execute network setting for performing communication according to a fourth aspect of the present invention is characterized by comprising: program code for setting predetermined information using a predetermined communication profile from a plurality of communication profiles created based on setting information required for a communication used in a network, and performing communication connection according to the network setting; and program code for determining whether or not communication connection by the performing communication connection has been successfully established, selecting a communication profile optimal for a current network environment from the plurality of communication profiles as a communication profile used in the network setting when the connection has not been successfully established.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration of main parts of an electronic device having a wireless function according to an embodiment of the present invention;
FIG. 2 is a block diagram showing a configuration of main parts of an electronic device having a wireless function according to an embodiment of the present invention;
FIG. 3 is a flow chart showing a procedure of changing over a communication profile reflected on communication means, which is performed by a diagnosis module, according to the embodiment;
FIG. 4 is a flow chart showing a procedure of automatically creating a communication profile, which is performed by a monitor module and a profile creation module, according to the embodiment;
FIG. 5 is a flow chart showing a procedure of automatically changing over a communication profile on a wireless network (SSID), which is performed by the diagnosis module, according to the embodiment;
FIG. 6 is a diagram showing one configuration example of a GUI screen according to the embodiment;
FIG. 7 is a diagram showing one configuration example of the GUI screen according to the embodiment; and
FIG. 8 is a diagram showing one configuration example of the GUI screen according to the embodiment.

Hereinafter, an embodiment according to the present invention will be described with reference to the drawings.

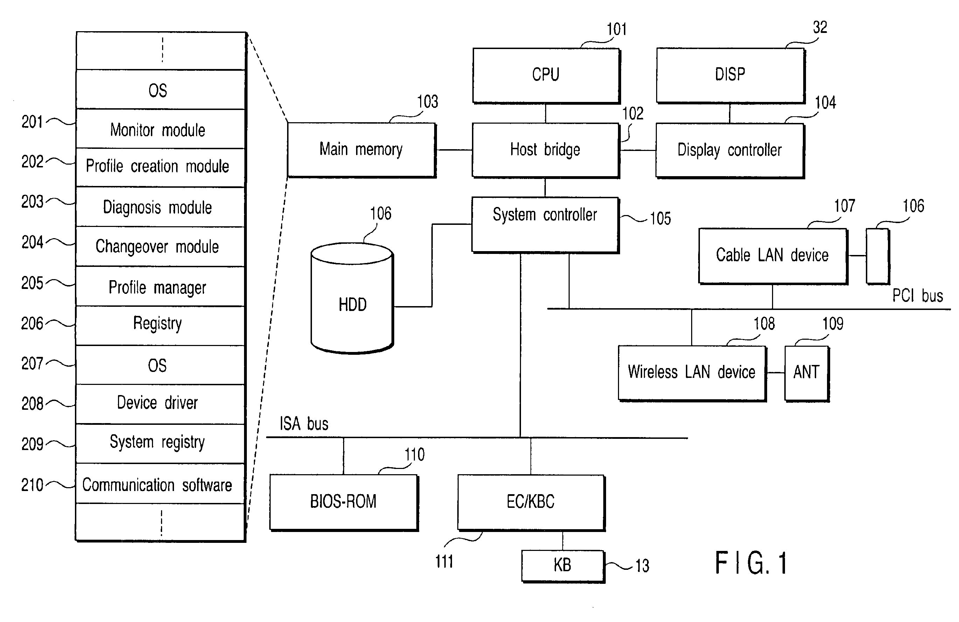

The system configuration of above-mentioned personal computer 30 will be explained referring to FIG. 1.

As show in FIG. 1, the personal computer 30 has a CPU 101, a host bridge 102, a main memory 103, a display controller 104, a system controller 105, a hard disk drive (HDD) 106, a cable LAN device 107, a wireless LAN device 108, a BIOS-ROM110, and embedded controller/keyboard controller IC (EC/KBC) 111, etc.

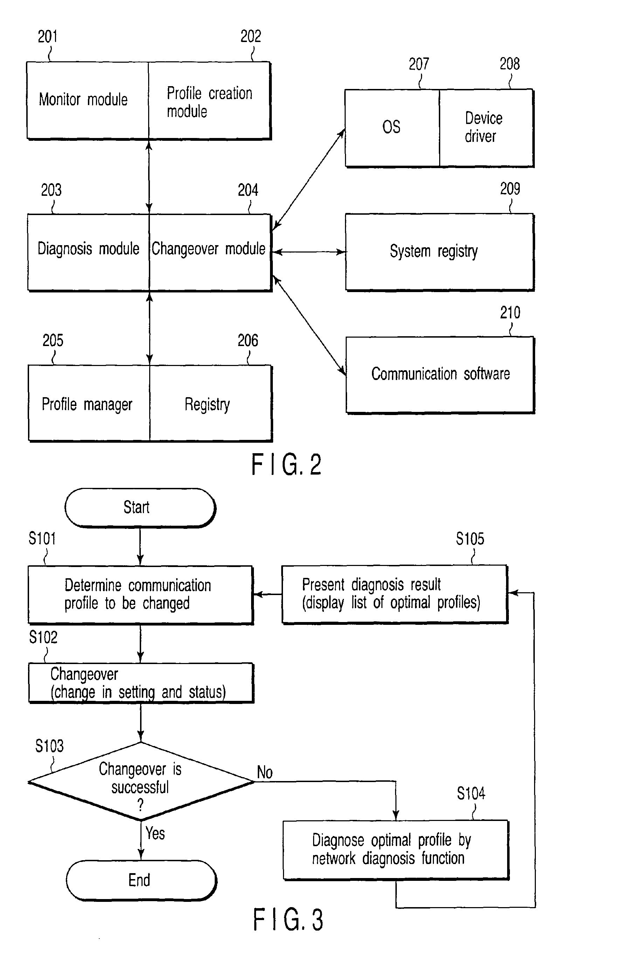

The CPU101 is a processor provided to control the operation of the computer, and executes the operating system (OS) and various applications/utility programs loaded from hard disk drive (HDD) 106 to the main memory 103. The CPU101 also executes the BIOS (Basic Input Output System) stored in the BIOS-ROM 110. In addition, the CPU101 executes various modules etc., stored in the main memory 103, shown in figure 2 described later in detail.

The host bridge 102 is a bridge device which connects between the local bus of the CPU 101 and the system controller 105. The memory controller which controls the access of the main memory 103 is built into the host bridge 102. The display controller 104 controls a display (DISP) 32 which is used as a display monitor of the computer and for instance uses an LCD.

The system controller 105 controls each device on the PCI bus and each device on the ISA bus. The controller IDE for controlling the hard disk drive 106 is built into the system controller 105.

The cable LAN device 107 is a cable network device to connect it with the cable network. The cable LAN device 107 communicates with the cable network through the cable LAN cable connected with the LAN connector 106.

The wireless LAN device 108 is a wireless network device to connect it with the wireless network, and is configured with the base band unit and the RF unit. The RF unit transmits and receives the radio signal through the antenna (ANT) 109. The wireless LAN device 108 is configured to execute the wireless communication for instance according to the IEEE802.11a/IEEE802.11b standard.

The embedded controller/keyboard controller IC (EC/KBC) 111 is a one chip microcomputer in which the embedded controller for the electric power control and the keyboard controller to control to control the keyboard 13 are integrated. The embedded controller/keyboard controller IC (EC/KBC) 111 has a function of turning on/off the power of the computer according to the operation of the power button by the user.

In FIG. 1, the OS is shown twice in the main memory 103. The software modules 201 to 210 are usually stored in the HDD 106, and are developed on the main memory 103 when the software is executed. Therefore, the profile and the registry, which are updated and/or changed, are stored in the HDD 106.

FIG. 2 is a block diagram showing a configuration of main parts of an electronic device having a wireless function according to the embodiment of the present invention. The electronic device according to the present embodiment comprises a monitor module 201, a profile creation module 202, a diagnosis module 203, a changeover module 204, a profile manager 205, a communication profile storage registry 206, and the like. A network environment setting function using a communication profile is realized by these constituent elements. Note that an OS (operating system) 207 operating on a computer, a device driver 208, a system registry 209 on the computer, a communication software 210, and the like which are shown in FIG. 2 are constituent elements provided in an ordinary computer device, respectively, which realize communication functions over various networks by network settings using communication profiles, here. The communication functions which are realized by the OS 207, the device driver 208, the system registry 209, the communication software 210, and the like are simply referred as "communication means".

The monitor module 201 realizes a network monitor function. The monitor module 201 comprises the profile creation module 202, and detects a change in the network environment of a currently used or usable network. The monitor module 201 detects a change in the network environment for a wired or wireless network. Specifically, the monitor module 201 notifies diagnosis module 203 of a status of the change in the network environment each time when a LAN cable is disconnected, when the LAN cable is connected, when a wireless network (SSID) is disconnected, when the wireless network (SSID) is detected, and further when a status change, a modification, and the like in a communication system and a communication device are detected. The SSID (service set identification) according to the present embodiment is identification information of the respective access points, for example, in the wireless LAN, and disconnection of the wireless network (SSID) indicates a status where the SSID of the access point where a wireless communication has been made cannot be detected (status where a wireless communication is disconnected due to movement of a device or the like).

Further, when a change in the network environment is detected, the monitor module 201 activates the profile creation module 202 in order to create a communication profile in the network environment.

When the monitor module 201 detects a change in the network environment, the profile creation module 202 acquires setting information required for the communication used in the detected network environment from the communication means, creates a communication profile based on the information, and sends the created communication profile to the profile manager 205. Specific examples of the setting information required for the communication at this time include a proxy server and a start homepage which relate to the Internet setting, a DHCP, an IP address, a subnet mask, a default gateway, a DNS server, and a WINS server which relate to the TCP/IP setting, and the like.

The diagnosis module 203 realizes a communication profile diagnosis function. The diagnosis module 203 comprises the changeover module 204 for changing a communication module which is applied to the communication means. When the above notification is received from the monitor module 201, or a notification indicating that a normal communication cannot be secured is received from the communication means, the diagnosis module 203 compares the current network environment setting detected by the monitor module 201 and the network environment setting according to the communication profile which is applied to the communication means, and selects a communication profile optimal for the current network environment detected by the monitor module 201 from the difference therebetween. This communication profile selection function is performed on a GUI screen described later only when a setting for automatically changing a communication profile is made. When the setting for automatically changing a communication profile is not made, a communication profile can be changed by the communication profile selection (manual selection) on the GUI screen.

Further, the diagnosis module 203 has a communication device changeover control function of enabling the wireless device provided in the communication means when the monitor module 201 detects a status where the wired LAN cable is disconnected and disabling the wireless device when the monitor module 201 detects a status where the wired LAN cable is connected. The communication device changeover control at this time is performed by the changeover module 204 according to an instruction from the diagnosis module 203.

The changeover module 204 changes the communication profile, which is applied to the communication means, to a communication profile selected by the diagnosis module 203 or a communication profile selected by a user under control of the diagnosis module 203.

The communication profile changeover control described above is performed each time when the diagnosis module 203 receives the above notification from the monitor module 201, or receives a notification indicating that a normal communication cannot be secured from the communication means, or according to user's judgment.

The profile manager 205 comprises the registry 206 for storing communication profiles therein, and stores and manages a communication profile created by the profile creation module 202, a communication profile created or edited by the user, a communication profile acquired through the network, and the like in the registry 206. A function of exporting/importing a communication profile through the network is realized by an application program included in the communication software 210.

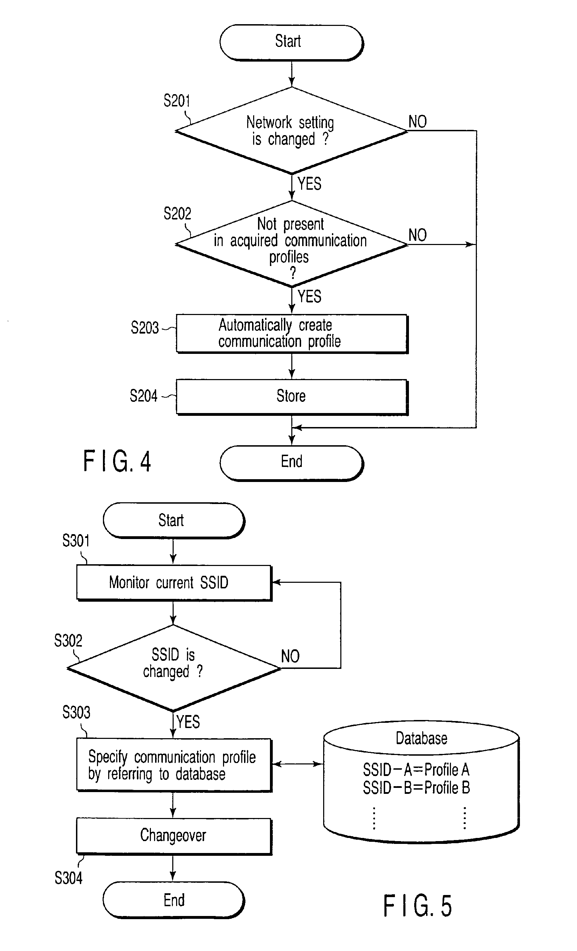

Further, with respect to each communication profile described above, the profile manager 205 has various GUI (graphic user interface) functions relating to creation, edition, and management of the communication profiles including a GUI function of displaying a list of optimal communication profiles according to an instruction of the diagnosis module 203 from the communication profiles stored in the registry 206, a GUI function of setting whether selection of a communication profile used by the communication means is performed manually or automatically, a GUI function of enabling edition such as deletion, change, addition, or the like of a communication profile to be managed, a GUI function of adding a name or unique icon designated by the user to a communication profile to be managed, and the like (refer to FIGS. 5 to 7).

FIG. 3 is a flow chart showing a procedure of changing over a communication profile reflected on the communication means, which is performed by the above diagnosis module 203.

FIG. 4 is a flow chart showing a procedure of acquiring (automatically creating) a communication profile, which is performed by the monitor module 201 and the profile creation module 202, and a processing in each step will be described later.

FIG. 5 is a flow chart showing a procedure of automatically changing over a communication profile over a wireless network (SSID), which is performed by the above diagnosis module 203, and a processing in each step will be described later.

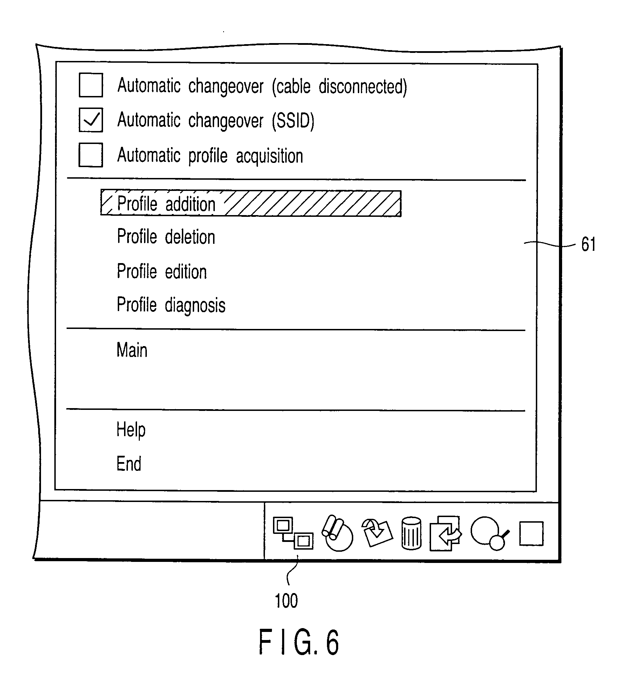

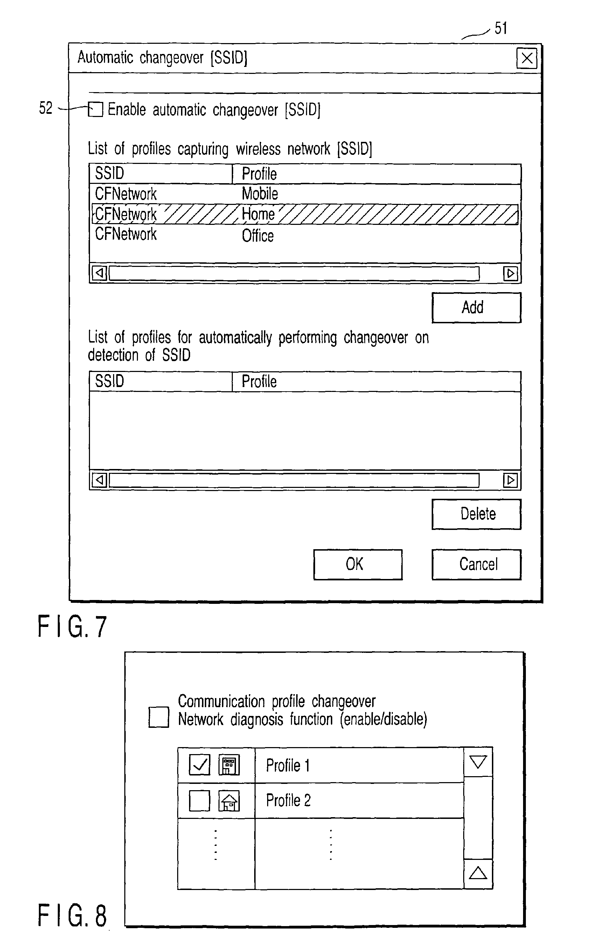

FIG. 6 is a diagram showing one configuration example of the GUI screen for performing function selection of a network environment setting function using a communication profile, and settings such as acquisition, addition, deletion, edition, diagnosis, and the like of the communication profile, where a network environment setting icon 100 provided in a task bar is selected and right-clicked by a mouse to be displayed as a pull-up menu 61. When a check box of "automatic changeover (cable disconnected)" is denoted with a check mark on this screen, the wireless device is automatically enabled when the wired LAN cable is disconnected (separated). Further, when the wired LAN cable is connected, the wireless device is disabled. When a check box of "automatic changeover (SSDI)" is denoted with a check mark on the above screen, the GUI screen (automatic changeover (SSDI) dialog) shown in FIG. 7 and described later is displayed, and the automatic changeover function of automatically changing a communication profile with respect to a change in the SSID of the wireless LAN along with movement of the device or the like can be set as enable on this screen. In addition, any one of "profile addition", "profile deletion", "profile edition", and "profile diagnosis" is selected so that a dialog of the selected work is displayed.

FIG. 7 is a diagram showing one configuration example of the GUI screen when enable/disable setting of a communication profile (wireless communication profile) automatic changeover is performed along with a change in the wireless network (SSID), which is displayed by denoting a check mark on the check box of "automatic changeover (SSID)" on the GUI screen shown in FIG. 6. Here, when a check box 52 provided in an automatic changeover (SSID) dialog 51 is denoted with a check mark, a communication profile automatic changeover with respect to the change in the SSID of the wireless LAN can be set as enable. An arbitrary number of communication profiles which are targets for automatic changeover are selected from "list of profiles catching wireless network (SSID)", and are transferred to "list of profiles for automatically performing automatic changeover on detection of SSID" by operating an "addition" button so that automatic changeover (SSID) is enabled (a check mark is denoted on the check box 52). As a result, the communication profile automatic changeover is enabled for the change in the SSID of the wireless LAN for the communication profiles placed in "list of profiles for automatically performing automatic changeover on detection of SSID".

FIG. 8 is a diagram showing one configuration example of the GUI screen when selection (manual selection) of a communication profile which is applied to the communication means, enable/disable setting of the diagnosis function in the diagnosis module 203 after the communication profile changeover are performed.

Here, an operation according to the embodiment of the present invention will be described with reference to the above respective drawings.

### (1) Acquisition of communication profile

Acquisition and storage of a communication profile can be performed using the GUI screen shown in FIG. 6. The GUI screen shown in FIG. 6 is displayed by selecting and right-clicking the network environment setting icon 100 placed in the task bar by the mouse. In this example, when a check mark is denoted on the check box of "profile automatic acquisition" on the pull-up menu 61, a communication profile is automatically acquired.

FIG. 4 shows a procedure of acquiring (automatically creating) a communication profile, which is performed by the monitor module 201 and the profile creation module 202 at this time.

When a change in the network environment is detected, the monitor module 201 activates the profile creation module 202 (YES in step S201 in FIG. 4).

When the monitor module 201 detects a change in the network environment, the profile creation module 202 acquires setting information required for the communication used in the detected network environment from the communication means and examines whether or not a communication profile having the information is present in the registry 206 (step S202 in FIG. 4). Here, the communication profile creation processing is terminated when a communication profile having the above acquired information is present in the registry 206 (NO in step S202 in FIG. 4), and a communication profile is created based on the above acquired information and the fact is notified to the profile manager 205 (step S203 in FIG. 4) when a communication profile having the above acquired information is not present in the registry 206 (YES in step S202 in FIG. 4). The profile manager 205 stores the communication profile created by the above profile creation module 202 in the registry 206 in response to a reception of the above notification (step S203 in FIG. 4) .

In this manner, each time when a change in the network environment occurs, the communication profile in the network environment is acquired. With respect to the wireless LAN, for example, a communication profile according to the SSID setting is created and stored in the registry 206. Further, with respect to an Internet browser, communication profiles according to enable/disable of the respective statuses of proxy server setting information and the communication device currently connected to the communication means, TCP/IP setting information provided on the communication device, and the like are created, and each created communication profile is stored in the registry 206.

Further, when an item of "profile addition" is selected on the pull-up menu 61 shown in FIG. 6, a communication profile according to the current network environment setting detected by the monitor module 201 is created by the profile creation module 202. The communication profile is stored in the registry 206 by the profile manager 205.

In this manner, the communication profile in the current network environment can be acquired.

### (2) Manual changeover of communication profile

Manual changeover of a communication profile can be performed using the GUI screen shown in FIG. 8. This GUI screen shown in FIG. 8 is displayed by selecting and left-clicking the network environment setting icon 100 placed in the task bar by the mouse in this example. A list of communication profiles stored in the registry 206 is displayed on this GUI screen. At this time, the communication profile whose check box is denoted with a check mark is the communication profile currently reflected on the communication means.

When the user selects a communication profile on the communication profile list display screen shown in FIG. 8, the communication profile changeover processing shown in FIG. 3 is performed under control of the diagnosis module 203 and changeover of the communication profile reflected on the communication means is performed.

According to this processing, when the user selects a communication profile from the communication profile list shown in FIG. 8 (step S101 in FIG. 3), the changeover module 204 changes the communication profile reflected on the communication means to the above selected communication profile under control of the diagnosis module 203 (step S102 in FIG. 3). The communication means tries to establish communication according to the network setting of this changed communication profile.

At this time, when a notification indicating that the communication is not normally established is received from the communication means (NO in step S103 in FIG. 3), the diagnosis module 203 refers to the communication profiles stored in the registry 206, compares the current network environment setting detected by the monitor module 201 and the network environment setting according to the communication profile which is applied to the communication means, and selects a communication profile optimal for the current network environment detected by the monitor module 201 from the difference therebetween (step S104 in FIG. 3). This selected communication profile is reflected on the communication profile list display screen shown in FIG. 8 (step S105 in FIG. 3). For example, the selected optimal communication profile is clearly shown by specific coloring, blinking, brightness changing, or the like on the communication profile list screen.

When the user selects the specifically-displayed communication profile from the communication profile list (step S101 in FIG. 3), the changeover module 204 changes the communication profile reflected on the communication means to the above selected communication profile under control of the diagnosis module 203 (step S102 in FIG. 3).

Here, when a notification indicating that the communication has been normally established is received from the communication means, the diagnosis module 203 recognizes that the communication profile changeover has been successfully performed, and terminates the communication profile diagnosis processing along with the communication profile changeover at this time (YES in step S103 in FIG. 3). Further, when a notification indicating that the communication has not been normally established is received from the communication means (NO in step S103 in FIG. 3), the diagnosis module 203 performs the above communication profile selection processing again, and repeatedly performs the processing for selecting an optimal communication profile instead of the previously-selected communication profile.

In this manner, the changeover of the communication profile applied to the communication means is performed.

Since the communication profile changeover function along with a change in the network is employed as described above, the following can be performed: for example, when the user uses a notebook type personal computer at his/her home and establishes network settings (TCP/IP, Internet explorer, network device, and the like), he/she captures a profile name as "home", and then similarly captures the network settings at office to assume the profile name at that time as "office", so that, when the user brings back the notebook type personal computer to his/her home and establishes the network settings, the setting is changed to the previously-captured network setting for home by selecting "home" on the GUI screen shown in FIG. 8, and is changed to the network setting for office by selecting "office" at user's office.

### (3) Automatic changeover of communication profile

The communication profile automatic changeover automatically performs changeover of a communication profile applied to the communication means by the diagnosis module 203 and the changeover module 204 when the monitor module 201 detects a change in the network environment such as a status change in the communication device, a partial setting change in the communication functions provided on the device, a change in the system relating to the communication (for example, a change in the connected SSID in the wireless LAN device, docking of a docker, cable connection/disconnection of the wired LAN device), or the like. In addition, the operation description of this embodiment is made by exemplifying the communication profile automatic changeover processing along with a change only in the SSID for the wireless LAN.

Here, the communication profile automatic changeover processing along with the change in the wireless network (SSID) will be described.

The communication profile automatic changeover processing along with the change in the wireless network (SSID) can be performed using the GUI screen shown in FIG. 7. The GUI screen shown in FIG. 7 is displayed by denoting a check mark on the check box of "automatic changeover (SSID)" on the GUI screen shown in FIG. 6 as described above.

On this GUI screen shown in FIG. 7, an arbitrary number of communication profiles which are targets for automatic changeover are selected from "list of profiles catching wireless network (SSID)", these selected communication profiles are transferred to "list of profiles for automatically performing changeover on detection of SSID" by operating the "addition" button, and sets the automatic changeover (SSID) as enable (a check mark is denoted on the check box 52). According to this setting, the processing shown in FIG. 5 is performed under control of the diagnosis module 203 in the succeeding wireless communication (wireless LAN communication) using the wireless network (SSID), and the communication profile automatic changeover for the change in the SSID of the wireless LAN is performed for the communication profiles set in "list of profiles for automatically performing changeover on detection of SSID" on the above GUI screen shown in FIG. 7. According to this embodiment, a database for storing a profile name for designating the communication profile and SSID in an associated manner is provided in each communication profile of the wireless network (SSID) stored in the registry 206, and this database is referred to at the time of the communication profile changeover processing along with a change in the SSID.

The monitor module 201 monitors the SSID of the wireless LAN (step S301 in FIG. 5), detects a change in the SSID (YES in step S302 in FIG. 5), and notifies the diagnosis module 203 of the status.

When the above notification is received from the monitor module 201, the diagnosis module 203 refers to the above database to retrieve the profile name associated to the SSID detected by the above monitor module 201 and to select a communication profile corresponding to this retrieved profile name from the registry 206, and activates the registry 206 (step S303 in FIG. 5). The changeover module 204 changes the communication profile applied to the communication means to the above selected communication profile under control of the diagnosis module 203 (step S304 in FIG. 5).

Since the communication profile automatic changeover function along with the change in the wireless network (SSID) is employed in this manner, the following can be performed: for example, since changeover of the SSID is automatically performed each time when the using place is changed (namely, each time when an access point is changed) in the case where a notebook type personal computer is used both at home and at office, the user can utilizes the wireless network (SSID) without being specifically conscious of the communication environment setting changeover along with the change in the access point.

Since the network environment setting function using the communication profile according to the present invention is employed, it is possible to realize a system capable of remarkably reducing operations and working load of user on various settings required for a communication along with a change in a network environment and of being adapted to various network environments with easy and simple operation. For example, in the case where one notebook type personal computer is connected to different networks at a plurality of places where the network environments are different (for example, connected to the wireless networks) to be used, when various setting information required for the communication at each using place is previously registered as the communication profile, it is possible to set the network environment using the communication profile adapted to the network environment at the using place depending on a using place at different time without complicated setting operations by the user.

As described above in detail, according to the embodiment of the present invention, it is possible to remarkably reduce operations and working load of user on various settings required for a communication along with a change in a network environment and to be adapted to various network environments with easy and simple operation.

## Claims

1. An electronic device having a communication function **characterized by** comprising:
means (210) for setting predetermined information using a predetermined communication profile from a plurality of communication profiles created based on setting information required for a communication used in a network, and performing communication connection according to the network setting; and
means (203, 204) for determining whether or not communication connection by the means for performing communication connection has been successfully established, and selecting a communication profile optimal for a current network environment from the plurality of communication profiles when the connection has not been successfully established,
wherein the means for performing communication connection establishes communication connection using the selected communication profile.

2. The electronic device according to claim 1, **characterized by** further comprising: :
means (201) for detecting a change in a network environment;
means (202) for, when the means for detecting the change in the network environment detects a change in a network environment, acquiring setting information required for a communication used in the detected network environment and creating a communication profile based on the information; and
means (205) for managing communication profiles created by the means for creating the communication profile,
wherein the means for performing communication connection performs network setting using a communication profile managed by the means for managing communication profiles and establishes communication connection according to the setting, and
means (203) for diagnosing a communication profile determines whether or not communication connection by the means for performing communication connection has been successfully established, and selects a communication profile optimal for a current network environment detected by the means for detecting the change in the network environment from the communication profiles managed by the means for managing communication profiles when the connection has not been successfully established.

3. The electronic device according to claim 1, **characterized by** further comprising a graphic user interface which designates whether selection of a communication profile used by the means for performing communication connection is performed manually or automatically.

4. The electronic device according to claim 1, **characterized in that** the means for diagnosing the communication profile further comprises means for displaying a list of optimal communication profiles in an output manner and causing a user to select a communication profile from the list.

5. The electronic device according to claim 2, **characterized in that** the means for diagnosing the communication profile further comprises means for receiving a notification indicating that a normal communication cannot be secured from the means for performing communication connection; and
means for comparing a current network environment detected by the means for detecting the change in the network environment and a network environment according to a currently-selected communication profile on a reception of the notification, and selecting an optimal communication profile used by the means for performing communication connection from the difference therebetween.

6. The electronic device according to claim 2, **characterized in that** the means for diagnosing the communication profile further comprises a graphic user interface which compares a current network environment detected by the means for detecting the change in the network environment and a network environment according to a currently-selected communication profile, and presents the difference therebetween to a user.

7. The electronic device according to claim 2, **characterized in that** the means for diagnosing the communication profile further comprises changeover control means for enabling a wireless device when the means for detecting the change in the network environment detects a status where a LAN cable is disconnected, and disabling the wireless device when the means for detecting the change in the network environment detects a status where the LAN cable is connected.

8. The electronic device according to claim 2, **characterized by** further comprising means for performing edition of a communication profile including addition, deletion, and modification of a communication profile managed by the means for managing communication profiles.

9. The electronic device according to claim 2, **characterized in that** the means for detecting the change in the network environment comprises means for notifying the means for diagnosing the communication profile of a status of a change in the network setting when a LAN cable is disconnected, or when the LAN cable is connected, or when a wireless network is disconnected, or when the wireless network is detected, and
the means for diagnosing the communication profile further comprises means for changing a communication profile used by the means for performing communication connection when the means for detecting the change in the network environment detects a status where a LAN cable is disconnected or detects a status where the LAN cable is connected, alternatively detects a status where a wireless network is disconnected or detects the wireless network.

10. The electronic device according to claim 2, **characterized in that** the means for creating a communication profile further comprises means for acquiring at least one information of information on a status and setting of a communication device, information on setting accompanying the communication device, information on system setting relating to the communication device as setting information required for a communication, and creating a communication profile based on the acquired information.

11. The electronic device according to claim 2, **characterized in that** the means for managing communication profiles further comprises means for denoting a name or unique icon designated by a user to a communication profile to be managed, and storing and managing the same.

12. The electronic device according to claim 2, **characterized in that** the means for creating a communication profile acquires at least any item of information on a proxy server or start homepage which relates to the Internet, a DHCP, an IP address, a subnet mask, a default gateway, a DNS server, or a WINS server which relates to TCP/IP as setting information required for a communication, and creating a communication profile based on the acquired information.

13. A communication environment setting method of an electronic device having a communication function with a network connection **characterized by** comprising:
setting predetermined information using a predetermined communication profile from a plurality of communication profiles created based on setting information required for a communication used in a network, and performing communication connection according to the network setting; and
determining whether or not communication connection by the performing communication connection has been successfully established, selecting a communication profile optimal for a current network environment from the plurality of communication profiles when the connection has not been successfully established, and changing over a communication profile used in the communication connection to the selected communication profile.

14. The communication environment setting method according to claim 13, **characterized by** further comprising:
detecting a change in a network environment to be used;
acquiring setting information required for a communication used in the detected network environment and creating a communication profile based on the information, when a change in a network environment is detected; and
managing the communication profile,
wherein the detecting the change in the network environment performs network setting using the communication profile and establishes communication connection according to the setting, and
the acquiring setting information determines whether or not communication connection has been successfully established, and selects a communication profile optimal for a detected current network environment from the communication profile when the connection has not been successfully established.

15. The communication environment setting method according to claim 14, **characterized in that** the detecting the change in the network environment comprises notifying of a status of a change in the network setting when a LAN cable is disconnected, or when the LAN cable is connected, or when a wireless network is disconnected, or when the wireless network is detected, and
the diagnosing the communication profile further comprises changing a communication profile used by the performing communication connection when the detecting the change in the network environment detects a status where a LAN cable is disconnected or detects a status where the LAN cable is connected, alternatively detects a status where a wireless network is disconnected or detects the wireless network.

16. The communication environment setting method according to claim 14, **characterized in that** the diagnosing the communication profile compares the detected current network environment setting and the network environment setting according to the communication profile which is currently selected, and selects a communication profile optimal for the detected current network environment from a difference therebetween, when a normal communication cannot be secured.
